# EUROPEAN PATENT APPLICATION

(11) **EP 4 578 830 A1**
(43) Date of publication of application: **02.07.2025**
(21) Application number: 23857650.8
(22) Date of filing: 17.08.2023
(51) Int. Cl.: C01B 33/158, C01B 33/159, B01J 13/00

(54) **METHOD FOR PRODUCING SILICA AEROGEL BLANKET**

(30) Priority: 26.08.2022 KR 20220107778
(71) Applicant: LG Chem, Ltd., Seoul 07336 (KR)
(72) Inventor: OH, Myung Eun, Daejeon 34122 (KR); PARK, Sang Woo, Daejeon 34122 (KR); KIM, Mi Ri, Daejeon 34122 (KR); LEE, Kyu Reon, Daejeon 34122 (KR); OH, Kyoung Shil, Daejeon 34122 (KR)
(74) Representative: Goddar, Heinz J.
(86) International application number: PCT/KR2023/012203
(87) International publication number: WO 2024/043616

(57) **Abstract**

The present invention relates to a method for preparing a silica aerogel including a step of steam drying.

## Description

### TECHNICAL FIELD

### Cross-reference to Related Applications

This application claims the benefit of Korean Patent Application No. 10-2022-0107778, filed on August 26, 2022, in the Korean Intellectual Property Office, the disclosure of which is incorporated herein in its entirety by reference.

### Technical Field

The present invention relates to a method for preparing a silica aerogel blanket including a step of steam drying.

### BACKGROUND ART

Aerogel is a highly porous material composed of nanoparticles and provided with high porosity, large specific surface areas, and low thermal conductivity, and thus is considered to be the preferred choice for highly efficient insulation materials, soundproof materials, and the like. However, the fact that such aerogel comes with very low mechanical strength due to the porous structure thereof has contributed to ongoing work on developing aerogel composites in which aerogel is bonded to fibrous blankets formed of typical insulating fibers (such as organic or inorganic fibers) through impregnation.

For example, a silica aerogel-containing blanket using silica aerogel is prepared through the process of silica sol preparation-gelation-aging-surface modification-drying. In this case, when the steps of aging and surface modification are included, a large amount of solvent is required, and separate treatment costs are required for a large amount of waste liquid generated after preparation.

In addition, typical processes of preparing aerogel have challenging issues such as complex overall process steps, a long process time, and high production costs involving commercialization for mass production due to additional facilities and larger space for aging and surface modification, making the commercialization challenging despite outstanding insulation performance compared to typical insulation materials.

As for the aerogel blankets, in general, normal pressure hot air drying (hot air drying) has been predominantly used, but the hot air drying sequentially heats a drying sample from the outside to the inside, making highly volatile organic solvents evaporate before low volatile water. Accordingly, the drying is processed with a rising amount of water in the pores of gels, which often causes a capillary phenomenon to destroy a pore structure due to shrinkage and the like. The aerogel blankets with the pore structure failure come with an issue of relatively degraded insulation performance. This may be further troublesome when drying is performed immediately without substitution with organic solvents having low surface tension.

In addition, the hot air drying relatively takes long to raise the temperature of the drying sample to the optimal drying temperature, and thus is performed at a temperature lower than the optimal drying temperature, thereby reducing drying efficiency when the aerogel blankets are dried only through the hot air drying. In addition, a risk of explosion of oil mist comes along.

Supercritical drying has been suggested as a method for overcoming the low drying efficiency and the degraded insulation performance of the hot air drying. The supercritical drying is a method of drying in which a supercritical fluid, for example, supercritical CO₂ is added to a high pressure reactor and substituted with ethanol in a wet-gel blanket, and the substituted ethanol is extracted. However, the issue is that the supercritical drying requires a separate drying device for supercritical extraction, incurring very high initial investment costs. In addition, the supercritical drying has to go through the process of compression-extraction-decompression, and this is time-consuming. In particular, the step of extraction in the supercritical drying works based on the principle that a liquid fluid, which is not in a supercritical state, dilutes and removes a solvent in an initial stage where the solvent is present in a greater proportion than a supercritical fluid, and accordingly, with the greater proportion of solvent, the extraction takes significantly longer. Moreover, the drying is performed in a supercritical extractor, and thus a continuous drying process is not applicable and only a batch process is allowed. Accordingly, when the supercritical drying is solely applied from the drying processes, commercialization/mass production of aerogel blankets may hardly be achieved.

### [Related Art Document]

### [Patent Document]

(Patent Document 1) Korean Patent Publication No. 2001-0033498 (published on April 25, 2001)

### DISCLOSURE OF THE INVENTION

### TECHNICAL PROBLEM

An aspect of the present invention provides a method for preparing a silica aerogel blanket having excellent insulation properties through efficient drying in a short period of time.

### TECHNICAL SOLUTION

According to an aspect of the present invention, there is provided a method for preparing a silica aerogel blanket, which includes the steps of 1) preparing silica sol containing a silica precursor composition, 2) impregnating a blanket substrate with the silica sol, 3) subjecting the silica sol to gelation in the state in which the blanket substrate is impregnated with the silica sol to prepare a silica wet gel blanket, 4) surface modifying the silica wet gel blanket, and 5) placing the surface modified silica wet gel blanket in a steam dryer and supplying steam to dry the blanket, wherein a temperature inside the steam dryer is greater than 70 °C.

(2) The present invention provides the method according to (1) above, wherein in the step 5), the steam is supplied at a flow rate of 0.1 to 25 kg/h.

(3) The present invention provides the method according to (1) or (2) above, wherein a temperature inside the steam dryer is 80 to 250 °C.

(4) The present invention provides the method according to any one of (1) to (3) above, wherein in the step 5), the steam is supplied for 30 minutes to 2 hours.

(5) The present invention provides the method according to any one of (1) to (4) above, wherein the blanket substrate is a film, a sheet, a net, a fiber, a porous body, a foam, a non-woven body, or a laminate of two or more layers thereof.

(6) The present invention provides the method according to any one of (1) to (5) above, wherein the silica precursor composition includes water glass.

(7) The present invention provides the method according to (6) above, wherein the gelation is performed using at least one acid catalyst selected from the group consisting of acetic acid, oxalic acid, nitric acid, sulfuric acid, and hydrofluoric acid.

(8) The present invention provides the method according to (6) or (7) above, wherein the surface modification involves immersing the silica wet gel blanket in an acid mixture aqueous solution containing acetic acid and an acid catalyst and surface modifying the blanket with an alkyldisiloxane-based compound.

(9) The present invention provides the method according to any one of (1) to (8) above, wherein the silica precursor composition is a mixture of a silicon-containing alkoxide-based compound, alcohol, and an acidic aqueous solution.

(10) The present invention provides the method according to (9) above, wherein the silicon-containing alkoxide-based compound is at least one selected from the group consisting of tetramethyl orthosilicate (TMOS), tetraethyl orthosilicate (TEOS), methyl triethyl orthosilicate, dimethyl diethyl orthosilicate, tetrapropyl orthosilicate, tetraisopropyl orthosilicate, tetrabutyl orthosilicate, tetra secondary butyl orthosilicate, tetra tertiary butyl orthosilicate, tetrahexyl orthosilicate, tetracyclohexyl orthosilicate, and tetradodecyl orthosilicate.

### ADVANTAGEOUS EFFECTS

According to the present invention, a silica aerogel blanket having high insulation properties through efficient drying in a short period of time may be prepared.

### MODE FOR CARRYING OUT THE INVENTION

Hereinafter, the present invention will be described in detail to aid in understanding of the present invention.

It will be understood that words or terms used in the description and claims of the present invention shall not be construed as being limited to having the meaning defined in commonly used dictionaries. It will be further understood that the words or terms should be interpreted as having meanings that are consistent with their meanings in the context of the relevant art and the technical idea of the invention, based on the principle that an inventor may properly define the meaning of the words or terms to best explain the invention.

A method for preparing a silica aerogel blanket of the present invention includes the steps of 1) preparing silica sol containing a silica precursor composition, 2) impregnating a blanket substrate with the silica sol, 3) subjecting the silica sol to gelation in the state in which the blanket substrate is impregnated with the silica sol to prepare a silica wet gel blanket, 4) surface modifying the silica wet gel blanket, and 5) placing the surface modified silica wet gel blanket in a steam dryer and supplying steam to dry the blanket, and a temperature inside the steam dryer is greater than 70 °C.

Hereinafter, the present invention will be described in detail for each step.

### Step 1)

The step 1) is a step of preparing silica sol containing a silica precursor composition.

The silica precursor is a material that allows aerogel to contain silica when prepared, and for example, water glass or a silicon-containing alkoxide-based compound may be used.

The water glass may be sodium silicate (Na₂SiO₃), which is an alkali silicate obtained by melting silicon dioxide (SiO₂) and an alkali, and when the silica precursor is water glass, the silica precursor composition may be a water glass solution in which distilled water is added to the water glass, mixed, and diluted.

The water glass solution may contain silicon dioxide (SiO₂) in an amount of 1 wt% to 13 wt%. When the water glass solution contains silicon dioxide in an amount lower than the above range, the aerogel may not be formed properly, and when the silicon dioxide is contained in an amount higher than the above range, gelation may not work well or a specific surface area may be reduced.

The water glass solution is not necessarily used as a silica precursor, and a silicon-containing alkoxide-based compound is also applicable. Specifically, the silica precursor may be a tetraalkyl silicate, such as tetramethyl orthosilicate (TMOS), tetraethyl orthosilicate (TEOS), methyl triethyl orthosilicate, dimethyl diethyl orthosilicate, tetrapropyl orthosilicate, tetraisopropyl orthosilicate, tetrabutyl orthosilicate, tetra secondary butyl orthosilicate, tetra tertiary butyl orthosilicate, tetrahexyl orthosilicate, tetracyclohexyl orthosilicate, and tetradodecyl orthosilicate. More specifically, the silica precursor may be tetraethyl orthosilicate (TEOS).

When the silica precursor is a silicon-containing alkoxide-based compound, the silica precursor composition may be a mixture of a silicon-containing alkoxide-based compound, alcohol, and an acidic aqueous solution.

The alcohol may be a monohydric alcohol such as methanol, ethanol, isopropanol, and butanol; or a polyhydric alcohol such as glycerol, ethylene glycol, propylene glycol, diethylene glycol, dipropylene glycol, and sorbitol, and any one thereof or a mixture of two or more thereof may be used. Among the above, when considering the miscibility with water and aerogel, the alcohol may be a monohydric alcohol having 1 to 6 carbon atoms, such as methanol, ethanol, isopropanol, and butanol.

The alcohol as described above may be used in an appropriate amount by those skilled in the art in consideration of the degree of hydrophobicity in aerogel to be finally produced while promoting a surface modification reaction.

An acid catalyst included in the acidic aqueous solution may specifically include one or more inorganic acids such as nitric acid, hydrochloric acid, acetic acid, sulfuric acid, and hydrofluoric acid, which may serve to hydrate the silicon-containing alkoxide-based compound.

Regardless of the type of the silica precursor, the silica precursor may be used in an amount such that the silica is including in an amount of 1 wt% to 13 wt% in the silica sol, but is not limited thereto. When the amount of the silica precursor satisfies the above range, it is desirable in terms of ensuring excellent mechanical properties, particularly flexibility, of the silica aerogel blanket and providing an improved insulation effect.

### Step 2)

The step 2) is a step of impregnating a blanket substrate with the silica sol.

The term "impregnation" used herein may be carried out by adding a catalyzed sol having fluidity to a substrate for a blanket, and may indicate that the catalyzed sol penetrates pores inside the substrate for a blanket.

The impregnation may be carried out in a reaction vessel capable of accommodating the blanket substrate, and may be performed by pouring the sol into the reaction vessel, or placing and wetting the blanket substrate in the sol-containing reaction vessel for deposition. In this case, in order to improve the bonding between the blanket substrate and the sol, the blanket substrate may be lightly pressed down to be sufficiently impregnated. Thereafter, the blanket substrate is pressed to a predetermined thickness at a constant pressure to remove the remaining sol, so that drying time may be reduced.

According to an embodiment of the present invention, the blanket substrate may be a film, a sheet, a net, a fiber, a porous body, a foam, a non-woven body, or a laminate of two or more layers thereof. In addition, depending on the use thereof, surface roughness may be formed or patterned on the surface thereof. Specifically, the blanket substrate may be a fiber capable of further improving the insulation performance by including spaces or voids in which the silica aerogel is easily inserted into the blanket substrate, and a blanket substrate having a low thermal conductivity may be used.

Specifically, the blanket substrate may be polyamide, polybenzimidazole, polyaramid, acrylic resin, phenol resin, polyester, polyether ether ketone (PEEK), polyolefin (e.g., polyethylene, polypropylene, or copolymers thereof), cellulose, carbon, cotton, wool, hemp, nonwoven fabric, glass fiber, or ceramic wool, but is not limited thereto.

### Step 3)

The step 3) is a step of subjecting the silica sol to gelation in the state in which the blanket substrate is impregnated with the silica sol to prepare a silica wet gel blanket;

In the present invention, gelation may be to form a network structure from a silica precursor material, and the network structure may be a planar mesh structure in which specific polygons having one or more types of atomic arrangement are linked to each other, or a structure in which specific polyhedrons share their vertices, edges, faces, and the like with each other to form a three dimensional skeleton structure.

When the silica precursor is water glass, the gelation may be performed through an acid catalyst. As the acid catalyst, any one or more of organic acids and inorganic acids having no chlorine in a molecular structure of a compound may be used. For example, the acid catalyst may be one or more selected from the group consisting of acetic acid, oxalic acid, nitric acid, sulfuric acid, and hydrofluoric acid, and may specifically be acetic acid, nitric acid, sulfuric acid, or a mixture of two or more thereof.

The acid catalyst may be included in an amount such that the silica sol has a pH of 3 to 10. When the pH of the silica sol is outside the above range, the gelation may not work well, or the gelation may go too fast or too slow, which may reduce processability.

When the silica precursor is a silicon-containing alkoxide-based compound, gelation may be performed through a base catalyst. Specifically, the base catalyst serves to promote gelation by increasing the pH of the silica sol.

The base catalyst may be an inorganic base such as sodium hydroxide and potassium hydroxide, or an organic base such as ammonium hydroxide, but is not limited thereto.

Specifically, the organic base may be ammonium hydroxide (NH₄OH), tetramethylammonium hydroxide (TMAH), tetraethylammonium hydroxide (TEAH), tetrapropylammonium hydroxide (TPAH), tetrabutylammonium hydroxide (TBAH), methylamine, ethylamine, isopropylamine, monoisopropylamine, diethylamine, diisopropylamine, dibutylamine, trimethylamine, triethylamine, triisopropylamine, tributylamine, choline, monoethanolamine, diethanolamine, 2-aminoethanol, 2-(ethyl amino)ethanol, 2-(methyl amino)ethanol, N-methyl diethanolamine, dimethylaminoethanol, diethylaminoethanol, nitrilotriethanol, 2-(2-aminoethoxy)ethanol, 1-amino-2-propanol, triethanolamine, monopropanolamine, or dibutanolamine, and among the above, any one thereof or a mixture of two or more thereof may be used.

More specifically, in the present invention, the base may be ammonium hydroxide (NH₄OH) or sodium hydroxide (NaOH).

The base catalyst may be included in an amount such that the silica sol has a pH of 3 to 10. When the pH of the silica sol is outside the above range, the gelation may not work well, or the gelation may go too slow, which may reduce processability. In addition, the base may be precipitated when added in a solid phase, it may be preferable that the base is added in the form of a solution diluted with the alcohol (a polar organic solvent).

### Additional process: Aging process

In the present invention, aging the silica wet gel blanket prepared after gelation in the step 3) may be further performed. The aging is a process of leaving the silica wet gel blanket at an appropriate temperature to complete chemical changes, and is capable of forming the formed network structure more solid, allowing the silica aerogel blanket to have greater mechanical stability.

The aging is supposed to be performed in an appropriate temperature range to optimally strengthen a pore structure, and the aging of the present invention may be performed by leaving the silica wet gel blanket at a temperature of 30 to 70 °C for 3 to 50 hours. When the aging temperature is within the above range, productivity may be obtained through an appropriate level of aging, and loss caused by the evaporation of an organic solvent may be prevented. In addition, the aging time in the above range indicates a range that may satisfy thermal conductivity and degree of hydrophobicity, and may be preferably 6 hours to 48 hours, more preferably 18 hours to 48 hours.

In addition, according to an embodiment of the present invention, the aging may be performed in a separate reaction vessel after recovering the silica wet gel blanket in which gelation is completed, or may be performed inside a reaction vessel in which gelation is performed, and may preferably be performed in the above reaction vessel in which gelation is performed for the benefit of process efficiency and equipment simplification.

### Step 4)

The step 4) is a step of surface modifying the silica wet gel blanket.

When a hydrophilic functional group present on a surface of aerogel is substituted with a hydrophobic functional group, the shrinkage of pores due to the surface tension of a solvent during the drying of the aerogel may be minimized by the repulsive force between hydrophobic functional groups. The dried aerogel maintains low thermal conductivity immediately after being dried, but a hydroxy functional group present on the surface of aerogel (for example, when the aerogel is a silica aerogel) which is a hydrophilic silanol group (Si-OH) present on a surface of silica absorbs water in the air, resulting in gradually rising thermal conductivity. Therefore, in order to maintain the low thermal conductivity, there is a need to modify the surface of the aerogel to be hydrophobic.

The surface modification of the present invention may be performed using a compound that hydrophobizes a wet gel surface without limitation.

For example, the compound may be a silane-based compound, a siloxane-based compound, a silanol-based compound, a silazane-based compound, or a combination thereof.

Specifically, the compound may be silane-based compounds including trimethylchlorosilane (TMCS), dimethyl dimethoxy silane, dimethyl diethoxy silane, methyltrimethoxysilane, trimethylethoxysilane, vinyl trimethoxy silane, ethyltriethoxysilane, phenyl triethoxy silane, phenyl trimethoxy silane, tetraethoxy silane, dimethyl dichloro silane, 3-aminopropyl triethoxy silane,; siloxane-based compounds including polydimethyl siloxane, polydiethyl siloxane, or octamethyl cyclotetra siloxane; silanol-based compounds including trimethylsilanol, triethylsilanol, triphenylsilanol, and t-butyldimethylsilanol; silazane-based compounds including 1,2-diethyldisilazane, 1,1,2,2-tetramethyldisilazane, 1,1,3,3-tetramethyl disilazane, 1,1,1,2,2,2-hexamethyldisilazane (HMDS), 1,1,2,2-tetraethyldisilazane, or 1,2-diisopropyldisilazane; or a combination thereof, and may specifically be hexamethyldisilazane.

For example, when using a silicon-containing alkoxide-based compound as a silica precursor, the surface modifier may be used as a solution phase diluted in an organic solvent, and the organic solvent may be alcohol (organic solvent), and in this case, the surface modifier may be diluted in an amount of 1 to 15 vol% with respect to a total volume of the diluted solution.

In addition, the surface modifier may be added in an amount of 0.01 to 10 vol% with respect to the silica wet gel blanket. In the above range, the amount of the surface modifier is sufficient, and accordingly, surface modification reactivity may be excellent and also surface modification may easily be achieved, and this may suppress a condensation reaction of the silanol group that is not surface modified during drying to allow a silica aerogel blanket as a final product to have even greater porosity.

The step 4) may be adding a surface modifier for 1 to 24 hours at a temperature of 50 to 90 °C, preferably 50 to 80 °C.

For example, when using water glass as a silica precursor, a process of additionally adding toluene to the wet gel may be performed before the surface modification in the step 4). In the additional adding of toluene, the toluene may be added after adding the acid mixture aqueous solution to the wet gel but before adding the alkyldisiloxane-based compound, or may be added together with the acid mixture aqueous solution and the alkyldisiloxane-based compound.

In the additional adding of toluene in the step 4), the toluene may be included in the hydrophobic organic solution layer. When sulfuric acid is used as the acid catalyst, in the case where the toluene is added, P-toluenesulfonic acid is formed through a reaction of the sulfuric acid and the toluene, and the P-toluenesulfonic acid works as a catalyst that activates a surface modification reaction by the alkyldisiloxane-based compound, showing a much superior surface modification reaction rate.

A concentration (w/w%) of the acid catalyst after the step 4) indicates a concentration of the acid catalyst contained in the acid mixture aqueous solution layer after the step 4), and may be indicated by Equation 2 below. The concentration of the acid catalyst may be calculated by measuring the weight of water in the acid mixture aqueous solution layer after the step 4) and then measuring the weight of the acid catalyst in the acid mixture aqueous solution layer through gas chromatography (GC). Acid catalyst concentration (w/w%) = weight of acid catalyst/(weight of acid catalyst + total weight of water in acid mixture aqueous solution layer) × 100

As described above, when the process of immersion in the acid mixture aqueous solution is completed, the acid concentration inside the wet gel and the acid concentration outside the wet gel reach equilibrium, and thus, when measuring the acid concentration of the acid mixture aqueous solution layer after the immersion, the acid concentration inside the wet gel may be indicated, thereby determining the acid concentration involved in surface modification.

After the step 4), the water contained in the acid mixture aqueous solution layer may be the one remaining after the step 4) among water contained in the acetic acid aqueous solution and the acid catalyst, water contained in the wet gel, and water from a hydrophilic hydrophobization reaction of the wet gel, and the total weight thereof may be a total weight of water in the acid mixture aqueous solution layer.

The step 4) may be performed by immersing the wet gel in an acid mixture aqueous solution and then surface modifying a resulting product with the alkyldisiloxane-based compound sequentially.

In the method for preparing a silica aerogel blanket according to an embodiment of the present invention, in the immersing of the wet gel in the acid mixture aqueous solution in the step 4), an acid mixture aqueous solution containing acetic acid and an acid catalyst is used, ensuring that the acetic acid satisfies a certain volume with respect to the wet gel, and the acetic acid concentration satisfies the above-described value after the step 4), and this may allow surface modification to be performed quickly, sufficiently, and effectively for the wet gel, particularly hydrogels prepared using water glass solutions.

The alkyldisiloxane-based compound may be added in a volume ratio of 1 to 3 times, specifically 1 to 2.5 times, more specifically 1 to 2 times with respect to the volume of the wet gel.

The alkyldisiloxane-based compound needs to be added in a volume of at least 1 time with respect to the volume of the wet gel to modify the wet gel and to perform solvent exchange for the wet gel, and when increasing an amount of the alkyldisiloxane-based compound, greater equipment is required, and accordingly, the alkyldisiloxane-based compound may be added within the above range with respect to the volume of the wet gel.

The alkyldisiloxane-based compound may be a hexaalkyldisiloxane-based compound, specifically hexa (C₁₋₈ alkyl)disiloxane, more specifically hexamethyldisiloxane.

The surface modification reaction may be performed at a temperature of 25 °C to 95 °C. In addition, a process of stirring may be performed in the process of immersing the wet gel in the acid mixture aqueous solution and the process of surface modifying the wet gel with the alkoxydisiloxane-based compound.

In this case, the stirring is not particularly limited, but may be performed at a speed of, for example, 50 rpm to 700 rpm.

In addition, the step 4) according to an embodiment of the present invention may be performed for 2 to 24 hours, and may preferably be performed for 4 to 22 hours or 8 to 20 hours for the benefit of improving economic efficiency of the process and maintaining a surface modification effect at an excellent level.

In the preparation method according to an embodiment of the present invention, when the step 4) is performed through a method in which the process of immersing the wet gel in the acid mixture aqueous solution and the process of performing surface modification with the alkyldisiloxane compound are carried out sequentially, the process of immersing the wet gel in the acid mixture aqueous solution may be performed for 30 minutes to 4 hours, specifically 30 minutes to 3 hours, more specifically 1 hour to 3 hours, and the process of performing surface modification with the alkyldisiloxane-based compound may be performed for one and a half hours to 20 hours, specifically 3 hours to 19 hours, more specifically 6 hours to 18 hours.

In the present invention, when the silica precursor is water glass, surface modification may be performed using a surface modifier containing an organic silane compound, and when the silica precursor is a silicon-containing alkoxide-based compound, surface modification may be performed using a surface modifier containing a polar solvent and an organic silane compound.

As the polar solvent, methanol, ethanol, or isopropyl alcohol may be used. As the organic silane compound, trimethylchlorosilane (TMCS), hexamethyldisilazane (HMDS), or methyltrimethoxysilane (MTMS), trimethylethoxysilane (TMES), ethyltriethoxysilane (ETES), or phenyltriethoxysilane (PTES) may be used, and preferably trimethylethoxysilane or hexamethyldisilazane may be used.

The surface modification is preferably mixed at a volume ratio of 0.5 to 10.0 with respect to the wet gel in the case of a polar solvent, and at a volume ratio of 0.1 to 10.0 with respect to the wet gel in the case of an organic silane compound, and a surface modifier containing an organic silane compound and a polar solvent may be at a volume ratio of 0.5 to 10.0 with respect to the wet gel. When the volume ratio of the organic silane compound to the wet gel is less than 0.1, reaction takes excessively long and surface modification efficiency may decrease, and when the volume ratio of the organic silane compound is greater than 10.0, costs rise and unreacted surface modifiers may cause shrinkage upon drying.

The organic silane compound and the polar solvent may be mixed in the volume ratio described above, and the mixed surface modifier may contain the organic silane compound in an amount of 10 vol% to 60 vol% with respect to a total volume of the surface modifier. The amount of the organic silane compound in the surface modifier may affect the degree of hydrophobicity and thermal conductivity, which may be improved with a higher amount thereof, but when the amount is greater than 60 vol%, there is no additional increase in surface modification efficiency, but an increase in the amount of waste organosilane compound, so the amount needs to be appropriately regulated within the above range.

In the preparation method according to an embodiment of the present invention, the surface modification process may be performed for 10 hours to 50 hours, preferably 15 hours to 50 hours, more preferably 18 hours to 48 hours, even more preferably 24 hours to 48 hours. The process time of surface modification as described above is to obtain an appropriate degree of hydrophobicity, and the process may preferably be performed within the above range in order to achieve the thermal conductivity and degree of hydrophobicity of a final aerogel blanket above a certain level.

The surface modification described above may be performed in a separate reaction vessel after recovering a silica wet gel-fiber composite in which gelation or aging is completed, or may be performed inside a reaction vessel in which gelation or aging is performed, and the aging and the surface modification may preferably be performed in the above reaction vessel in which gelation or aging is performed for the benefit of process efficiency and equipment simplification.

After the performing of the surface modification, a hydrophobic wet gel-fiber composite may be obtained.

### Step 5)

The step 5) is a step of placing the surface modified silica wet gel blanket in a steam dryer and supplying steam to dry the blanket, and in this case, a temperature inside the steam dryer is greater than 70 °C.

A normal pressure drying process requires no high pressure reaction conditions or particular high pressure equipment which is required for supercritical drying, and thus is simple and economical, but may markedly cause the collapse of internal pore structure of gel compared to the supercritical drying, resulting in a sharp decline in insulation performance due to evaporation of water or organic solvents at high temperature. In addition, the normal pressure drying process comes with a safety issue such as a risk of explosion of oil mist.

Meanwhile, the supercritical drying is performed at high pressure and thus requires high costs, and vacuum drying may cause degradation in physical properties of an aerogel blanket due to a drop in internal temperature upon drying.

In the present invention, steam drying is applied as a method of drying for a silica wet gel blanket, and thus shrinkage of aerogel which takes place upon drying is suppressed to improve insulation, the time required for drying is shortened, and the required equipment and conditions are simplified to improve the economic efficiency of drying. Additionally, the steam drying does not have any of the issues caused when using other drying methods as above.

In the present invention, the steam dryer may be used regardless of the form or the device name, but in order to sufficiently meet the purpose of drying the silica wet gel blanket in the present invention, the steam dryer is required to serve to raise and maintain the temperature to prevent steam from condensing within the steam dryer, and is required to withstand the pressure of steam and weak negative pressure.

In the present invention, the steam may be supplied at a flow rate of 0.1 to 25 kg/h, and specifically, the flow rate may be 5 to 25 kg/h or 15 to 25 kg/h.

When the supply flow rate of steam is within the above range, a heat transfer effect from steam is excellent, drying efficiency is excellent, physical properties of an aerogel blanket are improved, reduction in economic efficiency due to the overuse of steam is prevented, and a condensation reaction due to residual water is induced, resulting in no deterioration of aerogel physical properties.

In the present invention, a temperature inside the steam dryer is greater than 70 °C. More specifically, the temperature may be 80 to 250 °C, 80 to 200 °C, and 80 to 120 °C.

When the temperature inside the steam dryer is within the above range, impeding heat transfer due to steam condensation caused by too low temperature may be prevented, differences in internal and external physical properties of an aerogel blanket due to high temperature by ambient heat may be prevented from being caused, and energy cost reduction which is hard to be achieved may be resolved.

In the present invention, any specific method is not limited as long as the steam is applied to transfer heat to the silica wet gel blanket. For example, a direction in which steam is sprayed inside the steam dryer, and the speed or total amount of steam spray are not limited as well.

In the present invention, the drying time for applying the steam may vary depending on the size of the silica wet gel blanket, but may be, for example, 30 minutes to 2 hours.

In particular, the drying method of the present invention may further maximize the effect thereof when a water glass solution is used as a silica precursor when preparing silica sol.

When water glass is used as a silica precursor, a surface modifier remains as a solvent in the silica wet gel after surface modification is completed, and the surface modifier is hydrophobic and thus is not mixed with water, and accordingly, the recovered surface modifier (solvent) and condensed steam are easily separated even after drying, thereby providing benefits of easily recovering the surface modifier, which is expensive and may be reused to improve economic efficiency, and recovering the silica aerogel blanket as a final product.

Meanwhile, the method for preparing an aerogel blanket according to an embodiment of the present invention may additionally include a step of washing before the step of drying. The washing is to obtain a high-purity, hydrophobic aerogel by removing impurities and residual ammonia generated during reactions, and may be performed through a dilution process or an exchange process using an organic solvent.

In addition, according to an embodiment of the present invention, the method for preparing an aerogel blanket may specifically be a method for preparing a silica aerogel blanket, and the aerogel blanket produced by the preparation method may be a silica aerogel blanket.

### Example

Hereinafter, the present invention will be described in more detail with reference to Examples. However, the following Examples are for illustrative purposes only to describe the present invention and are not intended to limit the scope of the present invention.

### Example 1

33.8 g of water glass was diluted in 108.1 g of water to prepare a water glass solution, and 7.8 g of acetic acid (97%) was added to prepare silica sol. Glass fiber was impregnated with the silica sol and left for 10 minutes to obtain a glass fiber composite impregnated with wet gel.

140 g of acetic acid (≥97%) and 15 g of nitric acid aqueous solution (70%) (w/w%) were mixed to prepare an acid mixture aqueous solution, which was then poured onto the glass fiber impregnated with the wet gel and immersed in an oven at 60 °C for 2 hours at the constant temperature, and then 160 g of hexamethyldisiloxane (HMDSO) was added and subjected to a surface modification reaction in an oven at 75 °C for 16 hours at the constant temperature. In this case, the acetic acid in the acid mixture aqueous solution was used in an amount of 1 L with respect to the volume of 1 L of the wet gel, and the hexamethyldisiloxane was used in an amount of 1.5 L with respect to the volume of 1 L of the wet gel.

Thereafter, the surface modified silica wet gel blanket was placed in a steam dryer, and steam was continuously injected to perform steam drying (90 °C inside the steam dryer, steam flow rate of 20 kg/h, 30 minutes).

### Example 2

A solution of hydrochloric acid diluted in water (concentration = 0.15 wt%) was added to a mixed solution prepared by mixing tetraethylorthosilicate (TEOS) and hydrous ethanol at a weight ratio of 3:1 so that the mixed solution had a pH of 1, and then hydrous ethanol was further mixed to prepare silica sol (silica content: 4 wt%).

Thereafter, 0.5 vol% of a base catalyst was added to the silica sol to initiate a gelation reaction, and glass fibers were deposited to prepare a silica wet gel composite. A surface modifier solution prepared by mixing hexamethyldisilazane and ethanol at a volume ratio of 1:19 was added in an amount of 90 vol% with respect to the wet gel, and the surface was modified at 70 °C for 4 hours to prepare a hydrophobic silica wet gel blanket.

Thereafter, the surface modified silica wet gel blanket was placed in a steam dryer, and steam was continuously injected to perform steam drying (90 °C inside the steam dryer, steam flow rate of 20 kg/h, 30 minutes).

### Example 3

A silica aerogel blanket was prepared in the same manner as in Example 1, except that the drying conditions were set to an internal temperature of 150 °C in the steam dryer, a steam flow rate of 20 kg/h, and a time of 30 minutes.

### Example 4

A silica aerogel blanket was prepared in the same manner as in Example 1, except that the drying conditions were set to an internal temperature of 90°C in the steam dryer, a steam flow rate of 25 kg/h, and a time of 30 minutes.

### Example 5

A silica aerogel blanket was prepared in the same manner as in Example 1, except that the drying conditions were set to an internal temperature of 90°C in the steam dryer, a steam flow rate of 20 kg/h, and a time of 60 minutes.

### Example 6

A silica aerogel blanket was prepared in the same manner as in Example 1, except that the drying conditions were set to an internal temperature of 200°C in the steam dryer, a steam flow rate of 20 kg/h, and a time of 30 minutes.

### Example 7

A silica aerogel blanket was prepared in the same manner as in Example 1, except that the drying conditions were set to an internal temperature of 90°C in the steam dryer, a steam flow rate of 10 kg/h, and a time of 30 minutes.

### Comparative Example 1

A silica wet gel blanket prepared in the same manner as in Example 1 was placed in a convection oven and dried at normal pressure for 90 minutes at 150 °C to completely remove a solvent and moisture to prepare a silica aerogel blanket.

### Comparative Example 2

The silica wet gel blanket prepared in the same manner as in Example 1 was vacuum dried in a vacuum oven at 150 °C for 90 minutes to prepare a silica aerogel blanket.

### Comparative Example 3

The silica wet gel blanket prepared in the same manner as in Example 1 was placed in a supercritical extractor, carbon dioxide was injected, temperature in the extractor was raised to 50 °C for 1 hour, and supercritical drying was performed at 50 °C and 100 bar to prepare a silica aerogel blanket.

### Comparative Example 4

A silica aerogel blanket was prepared in the same manner as in Example 1, except that the drying conditions were set to an internal temperature of 70°C in the steam dryer, a steam flow rate of 20 kg/h, and a time of 30 minutes.

### Experimental Example 1

Five samples having a size of 15 cm × 15 cm were prepared for each blanket from the silica aerogel blankets prepared in each Examples and Comparative Example, and thermal conductivity of the samples was measured at room temperature (23 ± 5 °C) using HFM 436 Lambda equipment from NETZSCH.

As for the thermal conductivity, through a heat flux transducer in the equipment, heat flow of the samples located between a hot plate and a cold plate was measured, and based on the measurement, the calibration factor (N) may be obtained from a reference material whose thermal conductivity value is known, and from this N value and the measured heat flow value of the samples, a calculated value of the thermal conductivity may be obtained. In this process, a thickness of the samples is also obtained as a measured value.

**[Table 1]**

| | Thermal conductivity (mW/mK) | Thickness (mm) | Drying time (min) |
|---|---|---|---|
| Example 1 | 17.5 | 10.1 | 30 |
| Example 2 | 17.8 | 10.3 | 30 |
| Example 3 | 18.0 | 10.2 | 30 |
| Example 4 | 17.4 | 10.0 | 30 |
| Example 5 | 17.7 | 10.2 | 60 |
| Example 6 | 17.9 | 10.3 | 30 |
| Example 7 | 17.8 | 10.2 | 30 |
| Comparative Example 1 | 18.1 | 10.1 | 90 |
| Comparative Example 2 | 21.9 | 9.1 | 90 |
| Comparative Example 3 | 17.4 | 10.1 | 240 |
| Comparative Example 4 | 25.0 | 9.5 | 30 |

As shown in Table 1, in Examples 1 to 7 in which drying was performed according to the present invention, it is seen that drying was processed without shrinkage and insulation performance was also excellent. In addition, the drying time required to obtain the above-described properties was also short. Meanwhile, Comparative Examples 1 and 2 took much longer to complete drying as in Examples, indicating that the drying took longer than the steam drying. In Comparative Example 3, supercritical drying was performed, and it is seen that the drying time was required to be 8 times longer to obtain physical properties similar to those of Examples.

In addition, it is seen that Comparative Example 4 showed shrinkage during drying due to a thinner thickness, and reduced insulation performance as well compared to Examples. This indicates that the steam drying temperature was low and thus the steam condensed on the walls inside the steam dryer and the blanket surface, making the steam fail to serve as a heat carrier, and water droplets were formed on the blanket surface, slowing drying or causing shrinkage.

## Claims

1. A method for preparing a silica aerogel blanket, the method comprising the steps of:
1) preparing silica sol containing a silica precursor composition;
2) impregnating a blanket substrate with the silica sol;
3) subjecting the silica sol to gelation in the state in which the blanket substrate is impregnated with the silica sol to prepare a silica wet gel blanket;
4) surface modifying the silica wet gel blanket; and
5) placing the surface modified silica wet gel blanket in a steam dryer and supplying steam to dry the blanket,
wherein a temperature inside the steam dryer is greater than 70 °C.

2. The method of claim 1, wherein in the step 5), the steam is supplied at a flow rate of 0.1 to 25 kg/h.

3. The method of claim 1, wherein a temperature inside the steam dryer is 80 to 250 °C.

4. The method of claim 1, wherein in the step 5), the steam is supplied for 30 minutes to 2 hours.

5. The method of claim 1, wherein the blanket substrate is a film, a sheet, a net, a fiber, a porous body, a foam, a non-woven body, or a laminate of two or more layers thereof.

6. The method of claim 1, wherein the silica precursor composition comprises water glass.

7. The method of claim 6, wherein the gelation is performed using at least one acid catalyst selected from the group consisting of acetic acid, oxalic acid, nitric acid, sulfuric acid, and hydrofluoric acid.

8. The method of claim 6, wherein the surface modification involves immersing the silica wet gel blanket in an acid mixture aqueous solution containing acetic acid and an acid catalyst and surface modifying the blanket with an alkyldisiloxane-based compound.

9. The method of claim 1, wherein the silica precursor composition is a mixture of a silicon-containing alkoxide-based compound, alcohol, and an acidic aqueous solution.

10. The method of claim 9, wherein the silicon-containing alkoxide-based compound is at least one selected from the group consisting of tetramethyl orthosilicate (TMOS), tetraethyl orthosilicate (TEOS), methyl triethyl orthosilicate, dimethyl diethyl orthosilicate, tetrapropyl orthosilicate, tetraisopropyl orthosilicate, tetrabutyl orthosilicate, tetra secondary butyl orthosilicate, tetra tertiary butyl orthosilicate, tetrahexyl orthosilicate, tetracyclohexyl orthosilicate, and tetradodecyl orthosilicate.
